# EUROPEAN PATENT APPLICATION

(11) **EP 2 109 255 A1**
(43) Date of publication of application: **14.10.2009**
(21) Application number: 08700020.4
(22) Date of filing: 08.01.2008
(51) Int. Cl.: H04L 12/26, G08B 21/00, G06Q 10/00, G06Q 50/00

(54) **AN ALERT MEANS AND ALERT METHOD**

(30) Priority: 29.01.2007 CN 200710063142
(71) Applicant: Huawei Technologies Co., Ltd., Longgang District, Shenzhen Guangdong 518129 (CN)
(72) Inventor: LI, Disheng, Shenzhen Guangdong 518129 (CN)
(74) Representative: Barth, Stephan Manuel
(86) International application number: PCT/CN2008/000060
(87) International publication number: WO 2008/092361

(57) **Abstract**

An apparatus and method for generating alarms are disclosed. The method includes: obtaining configuration information of an alarm service, and obtaining monitored data of the alarm service according to the configuration information; obtaining a script file that implements the alarm service; calling and executing judging components or event components according to the calling addresses in the execution sequence in the script file, selecting the monitored data meeting the alarm conditions; and generating alarms for the attributes of the monitored data meeting the alarm conditions. The technical solution of the present invention may implement different service alarm functions by combining the components under the technical solution, thus improving the reuse of the components, sharing resources, and reducing the workload of repeated development and test. It is unnecessary to maintain each alarm service function module independently, thus reducing maintenance costs. Thus the error ratio is low and errors may be located easily.

## Description

### Field of the Invention

The present invention relates to alarm technologies, and in particular, to an apparatus and method for generating alarms.

### Background of the Invention

To find out exceptions of a target object in time, the usual practice is as follows: A monitoring device is used to collect data monitored during the operation of the target object on a periodic or real-time basis; intelligent analysis is performed on the monitored data; and alarms are generated when the related monitored data fails to comply with the standard. The compliance of the monitored data is determined by comparing the data with a preset threshold. For example, in telecom customer services, a preset compliance standard for a service is that the number of complaints about the service is smaller than threshold A. When the monitoring device detects that the number of complaints about the service is greater than or equal to threshold A, the monitoring device sends alarms by short messages to specified management personnel.

The monitoring device in the conventional technology is designed independently according to specific alarm service requirements. In each alarm service, a fixed logic is always used in the phases of obtaining the monitored data, performing logic judgment by comparing the monitored data with the alarm threshold, and sending an alarm notification, which are coupled. For example, in the alarm service of judging timeout tickets, to monitor whether the number of timeout tickets complies with the standard, threshold B for the number of timeout tickets is preset, and the work of an employee is monitored to obtain the number of timeout tickets; when the number of timeout tickets is greater than or equal to threshold B, an alarm notification is sent.

The alarm service in each field, especially the alarm service in the telecom field, has different requirements at different sites. The requirements at a same site may change at different times. A same alarm service may have different compliance indexes.
For example, for a timeout ticket alarm service, there are at least two indexes: number of timeout tickets and timeout ticket ratio. The timeout ticket ratio is equal to the total number of tickets divided by the number of timeout tickets. To judge whether the number of timeout tickets and the timeout ticket ratio comply with the standards, it is necessary to compare the two index values with the related thresholds. The alarm services regarding the number of timeout tickets and the timeout ticket ratio are implemented independently in the monitoring device for timeout ticket alarm services. To convert between the alarm services regarding the number of timeout tickets and the timeout ticket ratio according to the requirements at different sites or different times, it is necessary to modify the logic judgment function module. To generate alarms at the same time according to the indexes of the number of timeout tickets and the timeout ticket ratio, it is necessary to design two independent alarm function modules.

The service alarm functions are implemented independently in the monitoring device in the conventional technology. Thus, when the requirements for the service alarm functions are changed, a new service alarm function may be implemented in following two modes in the original monitoring device:

1. Modifying the logic judgment function module according to the new service alarm function. In this case, the whole logic judgment function module needs to be modified. A large number of codes need to be modified, which results in a heavy workload. Meanwhile, the original logic judgment function module is damaged, which may cause an unclear logic and bring about new errors. In addition, a lot of tests are required after the logic judgment function module is modified. Further, because the phases of implementing the alarm service are coupled, it is difficult to locate errors.

2. Adding new alarm service function modules. In this case, the development and test workload is huge. In addition, alarm service functions are not associated with each other, and each function module must be maintained independently, thus requiring higher maintenance costs. Furthermore, alarms need to be generated by different indexes for a same alarm service, and there are many repeated codes in the two function components, thus wasting resources.

### Summary of the Invention

Embodiments of the present invention provide an accurate and efficient apparatus and method for generating alarms to overcome the following problems that occur when the requirements of a service for the alarm functions are changed in the conventional technology: a large number of codes need to be changed; an unclear logic may occur, bringing about new errors easily; a lot of tests are needed; if an error occurs, it is difficult to locate the error; the development and test workload is huge; the maintenance costs are very high; and many codes are repeated between two function components, wasting unnecessary resources.

An apparatus for generating alarms provided in an embodiment of the present invention includes:

a service configuration information storing module, adapted to store configuration information of an alarm service;

an attribute obtaining module, adapted to obtain attributes of monitored data;

a component storing module, adapted to store judging components or judging components and event components;

a script file storing module, adapted to store a script file that implements the alarm service, where the script file includes calling addresses of the judging components that are arranged in an execution sequence or calling addresses of the judging components and the event components;

a judgment executing module, connected to the script file storing module and the component storing module, and adapted to call and execute the judging components or event components in turn according to the calling addresses that are arranged in the execution sequence in the script file, and select the monitored data meeting alarm conditions;

a notifying module, adapted to generate alarms for the attributes of the monitored data meeting the alarm conditions; and

a scheduling module, connected to the service configuration information storing module, the attribute obtaining module, the judgment executing module, and the notifying module, and adapted to obtain the configuration information of the alarm service, obtain the monitored data of the alarm service according to the configuration information, instruct the judgment executing module to execute the script file of the alarm service, select the monitored data meeting the alarm conditions, instruct the attribute obtaining module to obtain the attributes of the monitored data meeting the alarm conditions, and instruct the notifying module to generate alarms for the attributes of the monitored data meeting the alarm conditions.

A method for generating alarms provided in an embodiment of the present invention includes the following steps:

obtaining configuration information of an alarm service, and obtaining monitored data of the alarm service according to the configuration information; obtaining a script file that implements the alarm service; calling and executing related judging components or event components in turn according to calling addresses that are arranged in an execution sequence in the script file, and selecting the monitored data meeting alarm conditions; and generating alarms for attributes of the monitored data meeting the alarm conditions.

The apparatus for generating alarms provided in an embodiment of the present invention is configured with a component storing module for storing judging components or judging components and event components that implement various functions. A script file that implements various alarm service functions may be constructed by combining the judging components and/or event components, which makes it unnecessary to develop a complete script file independently and reduces the development and test workload. In addition, various alarm service functions are implemented by combining the shared judging components or event components, thus fully using resources and avoiding repeated codes. Further, only the shared judging components and event components need to be maintained, and each function module does not need to be maintained individually, thus reducing the maintenance costs. To implement a new alarm service function, it is only necessary to combine the existing component resources or add new components to the existing resources, and there is no need to modify the logic judgment function module. Compared with the conventional technology, embodiments of the present invention require modification of fewer codes, reduce the workload, and do not bring about new errors. Because it is unnecessary to test the existing components after the components are combined, the test workload is reduced, and the errors may be located easily even if errors occur.

### Brief Description of the Drawings

Figure 1 shows a structure of an apparatus for generating alarms provided in an embodiment of the present invention;

Figure 2 is a flowchart of a method for generating alarms provided in an embodiment of the invention;

Figure 3 is a first flowchart of a method for generating alarms provided in an embodiment of the present invention; and

Figure 4 is a second flowchart of a method for generating alarms provided in an embodiment of the present invention.

### Detailed Description of the Invention

Embodiments of the present invention separate the following three phases: obtaining the monitored data, performing alarm logic judgment, and sending an alarm notification. The script file for performing alarm logic judgment is constructed by shared, configurable and extensible judging components or a combination of judging components and event components, so that the monitored data, judging components, and event components are shared.

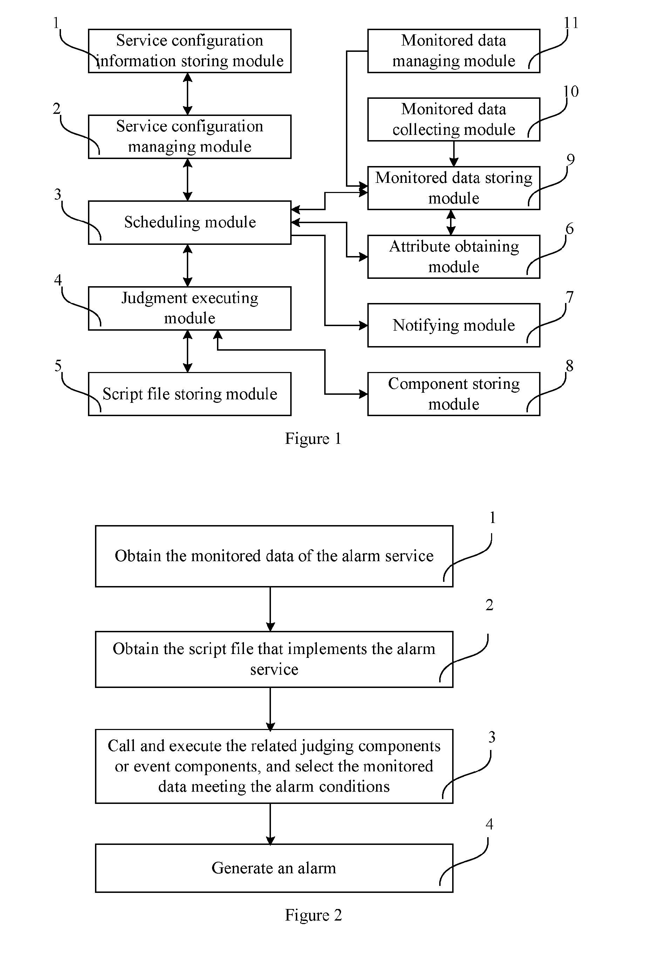

Figure 1 shows a structure of an apparatus for generating alarms provided in a preferred embodiment of the present invention. The apparatus includes a service configuration information storing module 1, a scheduling module 3, a judgment executing module 4, and a script file storing module 5, which are connected in turn. The apparatus further includes an attribute obtaining module 6 and a notifying module 7 that are connected to the scheduling module 3, and a component storing module 8 that is connected to the judgment executing module 4.

The service configuration information storing module 1 is adapted to store the configuration information of an alarm service, and includes the unique ID of the alarm service and the interface for obtaining the monitored data that is processed by the alarm service. The monitored data, that is, the processing object of the alarm service, may be an array with the "Value" and "Attribute" attributes. When it is determined that the monitored data meets the alarm conditions, the monitored data value is compared with an alarm threshold preset for the alarm service. If the monitored data is an array, the alarm threshold should also be an array. The number of values in these two arrays should be equal. When the alarm threshold is an array, each alarm threshold value may be labeled with a sequence number. In addition, the alarm threshold may be a numeric value or a character string. The alarm threshold may be set to a numeric value by default. If the alarm threshold is a character string, the type of the alarm threshold may be described in the subscript of the numeric array of the monitored data. When the numeric value of the monitored data matches the character string, the monitored data meets the alarm conditions. For example, in the alarm service of judging whether an employee is absent, there are three types of monitored data that identify the employee work status: "Normal", "Absent" and "Leave". When the alarm threshold is set to "Absent", the alarm threshold is a character string. When the value of the monitored data is "Absent", it matches the character string of the alarm threshold, thus meeting the alarm conditions. Attribute refers to the description information of the monitored data, and includes an attribute name and an attribute value. It may be used for logging or report analysis. For example, in an alarm service where an alarm is generated when an employee has timeout tickets, the monitored data value is the number of timeout tickets, the attribute name is employee ID, and the attribute value is 12345. If the attribute name is the name of the employee, the attribute value is Sam. The attribute of the monitored data may be extended according to requirements. For example, in an alarm service regarding the timeout ticket ratio, the total number of tickets of each employee may be added to the attribute. In addition, to ensure the legal use of an alarm service, the user may specify the authority of obtaining the configuration information of the alarm service, and set the authentication information for obtaining the configuration information of the alarm service in the service configuration information storing module 1, including a user name and a password. If the authority is set for each alarm service, the authentication information further includes a service ID, that is, the user is required to enter the service ID. The apparatus for generating alarms provided in an embodiment of the present invention also supports remote obtaining of the configuration information. Accordingly, the address for obtaining the configuration information may be further set. When the user originates a request for obtaining the configuration information, the user is required to enter the obtaining interface address or the obtaining interface address is detected automatically. The authentication information may include multiple authorized user names, passwords and addresses. The configuration information and authentication information stored in the service configuration information storing module 1 may be configured through extensible markup language (XML) files or other extensible files. Table 1 shows examples of the configuration information and authentication information stored in the service configuration information storing module 1.

**Table 1 Examples of configuration information and authentication information stored in the service configuration information storing module 1**

| Service ID | Interface for Obtaining the Monitored Data | Authentication Information | | | |
|---|---|---|---|---|---|
| | | Service ID | User Name | Password | Address |
| 01110 | 12.21 | 01110 | a;b;c | 0000 | A;B |
| 01111 | 12.23 | 01111 | e;f | 1111 | E;F;G |

The attribute obtaining module 6 is adapted to obtain the attributes of the monitored data.

The component storing module 8 is adapted to store revisable judging components, or the storing module 8 is adapted to store judging components and event components. The judging components or event components may be extended through database or other extensible configuration modes. The judging components are used for specific judgments. The judging components may be implemented to compare the related numeric value of the monitored data with the alarm threshold and select the monitored data meeting the alarm conditions. If the alarm threshold is a character string, the judging components may be implemented to match the related numeric value of the monitored data with the alarm threshold and select the monitored data meeting the alarm conditions. The event components are adapted to pre-process the original numeric value of the monitored data before the judgment or process these values after the judgment. For example, in an alarm service where an alarm is generated when the timeout ticket ratio of an employee exceeds the alarm threshold, if the original numeric value of the monitored data of the alarm service is equal to the number of timeout tickets of the employee, the number of timeout tickets may be pre-processed by an event component before the logic judgment; that is, the timeout ticket ratio can be calculated by dividing the total number of tickets by the number of timeout tickets of the employee. Then, a judging component may be used to compare the timeout ticket ratio of the employee with the alarm threshold and filter the original monitored data with the timeout ticket ratio greater than or equal to the alarm threshold.

The script file storing module 5 is adapted to store a revisable script file that implements the alarm service. The script file includes calling addresses of the judging components or judging components and event components that are arranged in the execution sequence. The script file may be configured through any extensible files or media. The following describes an example of configuring a script file through an XML file.

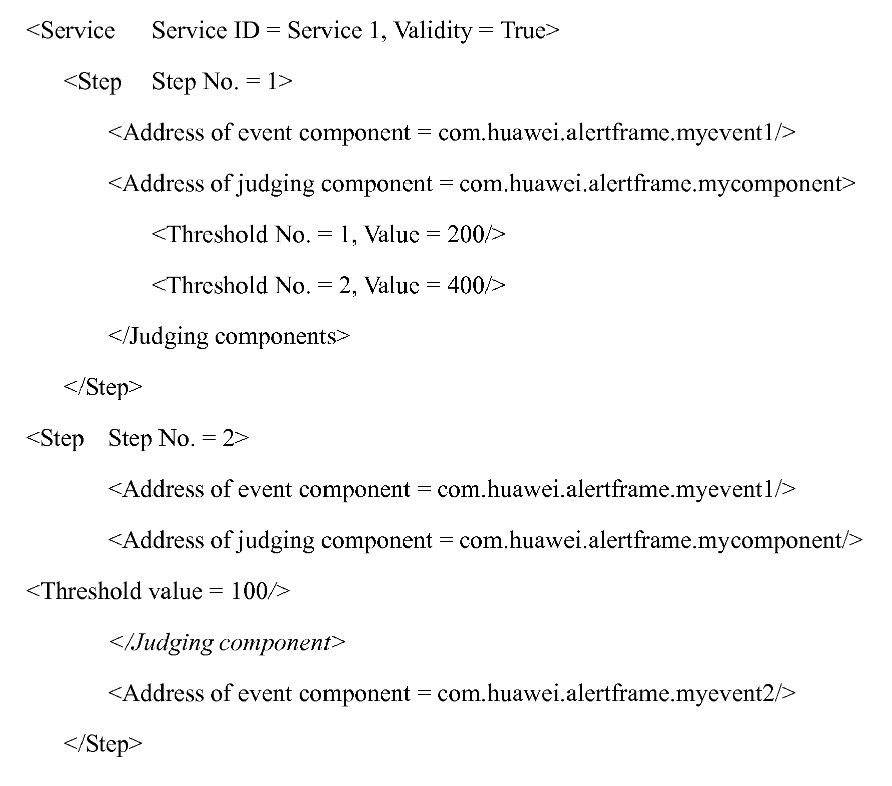

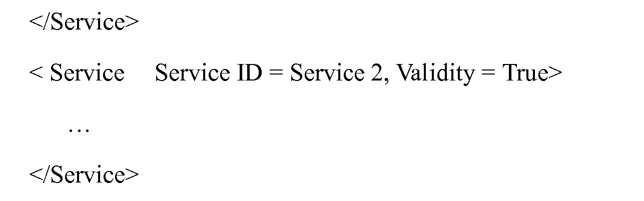

The above is an example of a script file for multiple alarm services that are executed in turn. Each alarm service has a service ID. The unnecessary service segments of each alarm service may be deleted or changed according to actual requirements. The "Validity" flag may also be set to "False" to screen the alarm service. Components in different steps are used to judge and filter the monitored data according to different alarm thresholds. The step No. indicates the sequence in which the step is executed in the whole script file. Output parameters in the previous step are used as the input parameters of the next step. For example, in an alarm service where an alarm is generated for the monitored data between A and B, the combined components in step 1 may be used to filter the monitored data with the numeric value greater than or equal to alarm threshold A. The filtered monitored data is used as the input parameters and the monitored data with the numeric value smaller than or equal to alarm threshold B may be filtered by the combined components in step 2. The judging components are adapted to compare the numeric array of the monitored data with the alarm threshold and filter the monitored data meeting the judging conditions. The addresses of the judging components are called and stored in the component storing module 8. The input parameters are the numeric array of the monitored data and the related alarm threshold. The input parameters include at least one alarm threshold. When there are multiple alarm thresholds, the sequence number is used to identify each alarm threshold and associate each alarm threshold with the numeric array of the monitored data. That is, the No.1 alarm threshold corresponds to the first data in the numeric array of the monitored data. Various judging components may be developed according to the constraints for developing the judging components. For example, an inheritance interface may be used to ensure that the input parameters and return values of the judging components are the numeric array of the monitored data. The event components are classified into event components before judging components and event components after judging components, which are respectively adapted to pre-process the numeric array of the original monitored data before the judgment and process the array after the judgment. The event components may be set according to the specific requirements of the alarm service. No event component or one or more event components may be set before and after each judging component. The addresses of the event components are called and stored in the component storing module 8. The input and return parameters of the event components are numeric arrays of the monitored data.

The judgment executing module 4 is adapted to call and execute the related judging components or event components from the component storing module 8 according to the calling addresses that are arranged in the execution sequence in the script file of the alarm service, and filter the monitored data meeting the alarm conditions.

The notifying module 7 is adapted to generate alarms for the attributes of the monitored data meeting the alarm conditions. For example, in an alarm service regarding the number of timeout tickets, an alarm is generated for the attribute "Employee ID: 12345" of the number of timeout tickets that exceeds the alarm threshold.

The scheduling module 3 is adapted to schedule each module to complete the whole alarm service process. Specifically, the configuration information of the alarm service is obtained from the service configuration information storing module 1 when the time of executing an alarm service is due according to a preset processing period of the alarm service; the monitored data of the alarm service is obtained through the obtaining interface specified in the configuration information, and the judgment executing module 4 is instructed to execute the script file that is associated with the service ID of the alarm service and filter the monitored data meeting the alarm conditions; the attribute obtaining module 6 is instructed to obtain the attributes of the monitored data meeting the alarm conditions and the notifying module 7 is instructed to generate alarms for the attributes of the monitored data meeting the alarm conditions.

A component storing module is configured in the preceding apparatus to store judging components or judging components and event components that implement various functions. A script file that implements various logic judgment functions may be constructed by combining the judging components and/or event components, which makes it unnecessary to develop a complete script file independently and reduces the development and test workload. In addition, various alarm service functions are implemented by combining the shared judging components or event components, thus fully using resources and avoiding repeated codes. Further, only the shared judging components and event components need to be maintained, and each function module does not need to be maintained independently, thus reducing the maintenance costs. To implement a new alarm service function, it is only necessary to combine the existing component resources or add new components to the existing resources. Compared with the conventional technology where it is necessary to modify the logic judgment function module, embodiments of the present invention require modification of fewer codes, reduce the workload and do not bring about new errors. After the components are combined, the existing components do not need to be tested. Only the integration test on the script file and test on the new components need to be performed. Thus, the test workload is reduced, and the errors may be located easily even if errors occur.

The preceding apparatus for generating alarms also includes a service configuration managing module 2. The service configuration information storing module 1 is connected to the scheduling module 3 through the service configuration managing module 2. The service configuration managing module 2 is adapted to obtain the configuration information of the alarm service from the service configuration information storing module 1 according to the instruction of the scheduling module 3. If the service configuration information storing module 1 stores the authentication information for obtaining the configuration information of the alarm service, the service configuration managing module 2 needs to authenticate the submitted authentication information when obtaining the configuration information. If the authentication succeeds, the service configuration managing module 2 returns the configuration information; otherwise, it returns the authentication failure prompt information.

The preceding apparatus for generating alarms also includes a monitored data storing module 9 that is connected to the attribute obtaining module 6 and the scheduling module 3. The monitored data storing module 9 is adapted to store the monitored data that is obtained by each obtaining interface.

Further, the preceding apparatus for generating alarms may include a monitored data managing module 11 that is connected to the monitored data storing module 9. The monitored data managing module 11 is adapted to modify and set the numeric value or attribute of the monitored data.

In addition, the apparatus for generating alarms may include a monitored data collecting module 10 that is connected to the monitored data storing module 9. The monitored data collecting module 10 is adapted to collect the monitored data and export the collected data to the monitored data storing module 9.

In the preceding apparatus for generating alarms, one or more of the service configuration information storing module 1, component storing module 8, script file storing module 5, and monitored data storing module 9 may be integrated. One or more of the service configuration managing module 2, attribute obtaining module 6, and monitored data managing module 11 may be integrated.

Figure 2 shows a flowchart of a method for generating alarms provided in an embodiment of the present invention. The method includes the following steps:

Step 1: Obtain the configuration information of the alarm service, and obtain the monitored data of the alarm service through the obtaining interface specified in the configuration information.

Step 2: Obtain the script file that implements the alarm service according to the service ID of the alarm service.

Step 3: Call and execute the related judging components or event components according to the calling addresses that are arranged in the execution sequence in the script file, and select the monitored data meeting the alarm conditions.

Step 4: Generate alarms for the attributes of the monitored data meeting the alarm conditions.

With reference to the preceding apparatus, the following describes the method for generating alarms provided in an embodiment of the present invention, where an alarm is generated when the timeout ticket ratio of an employee in a department reaches 20%. Supposing the service ID of the alarm service stored in the service configuration information storing module 1 is 1, the interface for obtaining the number of timeout tickets of the employee is 12.21, and the total number of tickets is 200; the monitored data of the employee stored in the monitored data storing module 9 is the number of timeout tickets of the employee, and the attribute is the employee ID. The script file of the alarm service needs two components: a judging component, adapted to select the number of timeout tickets with the timeout ticket ratio greater than or equal to 20%; and an event component before the judging component, adapted to convert the number of timeout tickets into the timeout ticket ratio.

Before the alarm service is executed, the user may check whether there is a script file meeting the preceding requirements of the alarm service. If no such file exists, the user may do as follows: select the judging component and event component that meet the preceding conditions from the component storing module 8; construct a script file according to the addresses of the judging component and the event component, service ID of the alarm service, and alarm threshold in the execution sequence in the script file; and execute the alarm service. If the required judging component or event component does not exist in the component storing module 8, the user may do as follows: construct a judging component or an event component that is required but does not exist according to the requirement of the alarm service for the script file and the existing judging component or event component, and store the constructed judging component or event component in the component storing module 8; construct a script file according to the addresses of the judging component and the event component, service ID of the alarm service, and alarm threshold in the execution sequence in the script file; and execute the alarm service. Supposing the script file required by the alarm service is as follows:

```
     // The service ID is the same as that in the configuration information.
     <Service Service ID = 1, Validity = True>
            // The event component coverts the number of timeout tickets into the
 timeout ticket ratio.
             <Address of event component = com.huawei.alertframe.myevent1/>
            // The output parameter of the preceding event component selected by the
 judging component is greater than 20%.
             <Address of judging component = com.huawei.alertframe.mycomponent>
                 // The alarm threshold is 20%.
                 < Threshold No. = 1 value = 20%/>
             </Judging component>
        </Service>
```

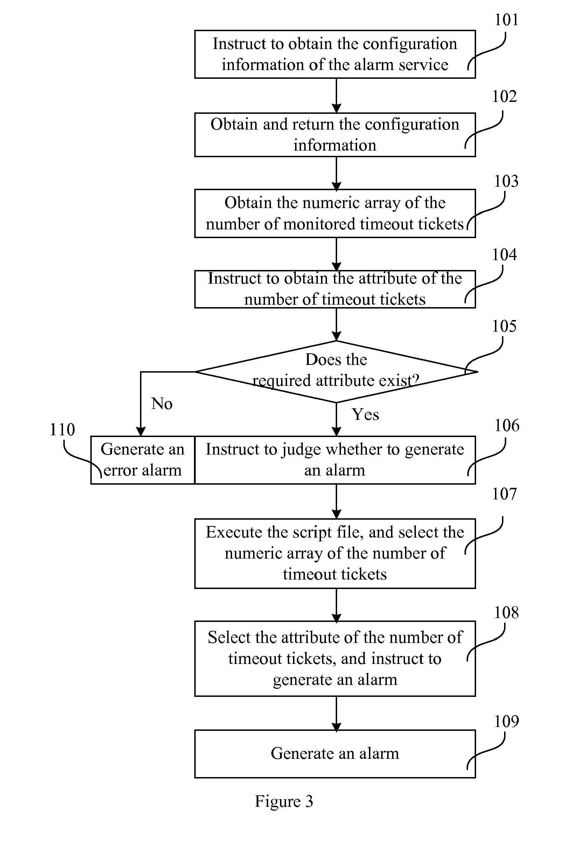

Figure 3 shows the first flowchart of a method for generating alarms for the preceding alarm service provided in an embodiment of the present invention. The method includes the following steps:

Step 101: When the time of executing the alarm service with the service ID of 1 is due, the scheduling module 3 instructs the service configuration managing module 2 to obtain the configuration information of the alarm service with the service ID of 1 from the service configuration information storing module 1.

Step 102: The service configuration managing module 2 obtains the configuration information of the alarm service with the service ID of 1 from the service configuration information storing module 1, and returns the obtained configuration information to the scheduling module 3.

Step 103: The scheduling module 3 knows that the interface for obtaining the monitored data with the service ID of 1 is 12.21. The 12.21 obtaining interface obtains the numeric array of the number of timeout tickets of an employee in a department from the monitored data storing module 9.

Step 104: The scheduling module 3 instructs the attribute obtaining module 6 to obtain the attribute of the monitored number of timeout tickets of the employee from the monitored data storing module 9.

Step 105: The scheduling module 3 checks whether the attribute includes required attributes such as employee ID. The employee ID includes an attribute name and an attribute value, where the attribute name is "Employee ID" and the attribute value is a character string representing the employee ID. If the attribute includes the employee ID, the process goes to step 106; otherwise, the process ends, and the scheduling module 3 instructs the notifying module 7 to generate an error alarm (step 110).

Step 106: The scheduling module 3 sends the obtained numeric array of the number of timeout tickets to the judgment executing module 4, and instructs the judgment executing module 4 to judge whether to generate an alarm for the numeric array of the number of timeout tickets.

Step 107: The judgment executing module 4 obtains the script file with the service ID of 1 from the script file storing module 5 and executes the script file; the judgment executing module 4 calls an event component with the address of com.huawei.alertframe.myevent1 from the component storing module 8 and executes the event component; the judgment executing module 4 pre-processes the numeric array of the number of timeout tickets to obtain a numeric array of the timeout ticket ratio of the employee. Then, the judgment executing module calls a judging component with the address of com.huawei.alertframe.mycomponent from the component storing module 8, and executes the judging component to filter a numeric array of the number of timeout tickets with the timeout ticket ratio greater than or equal to 20%, and returns the numeric array to the scheduling module 3.

Step 108: The scheduling module 3 selects the attribute of the number of timeout tickets with the timeout ticket ratio greater than or equal to 20%, such as "employee ID: 1101" and "employee ID: 1201", and instructs the notifying module 7 to generate an alarm for the attribute.

Step 109: The notifying module 7 generates an alarm for the attribute of the number of timeout tickets meeting the alarm conditions according to the instruction from the scheduling module 3.

When multiple alarm services need to be executed, the alarm services may be executed in turn according to the preceding process until all the alarm services are executed.

If the alarm threshold is a character string, in step 103, the scheduling module 3 identifies that the alarm threshold is a character string according to the subscript in the numeric array of the number of timeout tickets; accordingly, in step 107, when executing the judging component, the judgment executing module 4 compares the numeric array of the monitored data with the alarm threshold and filters the monitored data that matches the character string representing the alarm threshold.

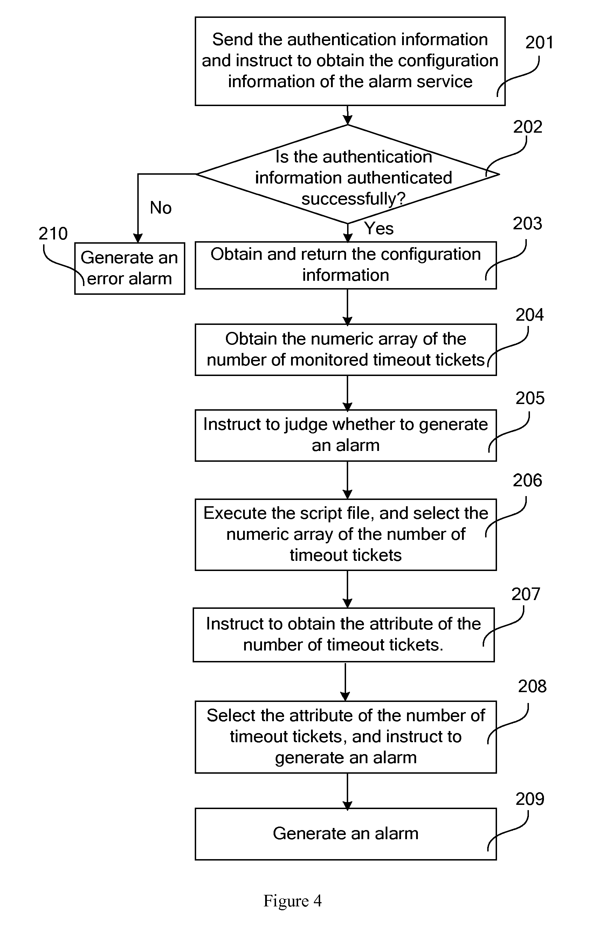

Figure 4 shows a second flowchart of the method for generating alarms for the alarm service same as that in Figure 3 in an embodiment of the present invention. The method includes the following steps:

Step 201: When the time of executing the alarm service with the service ID of 1 is due, the scheduling module 3 sends the authentication information that the user enters to the service configuration managing module 2 after receiving the request for processing the alarm service with the service ID of 1 from the user, and instructs the service configuration managing module 2 to obtain the configuration information of the alarm service with the service ID of 1 from the service configuration information storing module 1. The authentication information may be the user name and password or further include the obtaining address and service ID.

Step 202: The service configuration managing module 2 authenticates the authentication information that the user enters according to the related authentication information stored in the service configuration information storing module 1. If the authentication succeeds, the process goes to step 203; otherwise the process ends, and the service configuration managing module 2 instructs the notifying module 7 to generate an error alarm (step 210).

Step 203: The service configuration managing module 2 obtains the configuration information of the alarm service with the service ID of 1 from the service configuration information storing module 1, and returns the obtained configuration information to the scheduling module 3.

Step 204: The scheduling module 3 knows that the interface for obtaining the monitored data with the service ID of 1 is 12.21. The 12.21 obtaining interface obtains the numeric array of the number of timeout tickets of an employee in a department from the monitored data storing module 9.

Step 205: The scheduling module 3 sends the obtained numeric array of the number of timeout tickets to the judgment executing module 4, and instructs the judgment executing module 4 to judge whether to generate an alarm for the numeric array of the number of timeout tickets.

Step 206: The judgment executing module 4 obtains the script file with the service ID of 1 from the script file storing module 5 and executes the script file; the judgment executing module 4 calls an event component with the address of com.huawei.alertframe.myevent1 from the component storing module 8 and executes the event component; the judgment executing module 4 pre-processes the numeric array of the number of timeout tickets to obtain a numeric array of the timeout ticket ratio of the employee. Then, the judgment executing module calls a judging component with the address of com.huawei.alertframe.mycomponent from the component storing module 8, and executes the judging component to filter a numeric array of the number of timeout tickets with the timeout ticket ratio greater than or equal to 20%, and returns the numeric array to the scheduling module 3.

Step 207: The scheduling module 3 instructs the attribute obtaining module 6 to obtain the attribute of the monitored number of timeout tickets of the employee from the monitored data storing module 9.

Step 208: The scheduling module 3 selects the attribute of the number of timeout tickets with the timeout ticket ratio greater than or equal to 20% from the attributes returned by the attribute obtaining module 6, such as "employee ID: 1101" and "employee ID: 1201", and instructs the notifying module 7 to generate an alarm for the attribute.

Step 209: The notifying module 7 generates an alarm for the attribute of the number of timeout tickets meeting the alarm conditions according to the instruction from the scheduling module 3.

For the apparatus that generates an alarm when the number of timeout tickets of an employee reaches the alarm threshold, a logic judgment function module needs to be developed in the conventional technology to filter the number of timeout tickets of the employee with the numeric value greater than the alarm threshold. A judging component needs to be developed in an embodiment of the present invention to select the number of timeout tickets of the employee with the numeric value greater than the alarm threshold. The present invention is similar to the conventional technology in respect of code development, test and maintenance. However, when the requirements for the service alarm functions are changed, embodiments of the present invention have incomparable advantages over the conventional technology. The following gives a brief description about the advantages in combination with the embodiments.

1. If a same apparatus needs to be used to generate an alarm when the timeout ticket ratio of an employee reaches the alarm threshold, only the judgment layer may be modified to implement data conversion because no intermediate data processing layer exists in the conventional technology. This may damage the logic of the judgment layer and cause an unclear logic because the data processing logic and judgment logic are coupled. This may also bring about new errors. Meanwhile, the workload of test on the new judgment layer is huge. In addition, it is difficult to locate logic errors (if any) because the data processing logic and the filtering logic are coupled.

According to embodiments of the present invention, it is unnecessary to modify the original judging component. Only an event component needs to be added before the judging component to implement data conversion. The logic is clear because there is no need to modify the original judging component. Test is performed on the new event component only, thus reducing the workload. If logic errors occur, it is easy to locate the errors on the new event component.

2. If a same apparatus needs to be used to generate an alarm when the number of timeout tickets of an employee is within a specific numeric value range, it is necessary to modify or develop the judging and filtering logic function components within the specific numeric value range according to the conventional technology. If the original judgment layer is modified, the weaknesses in preceding item 1 may occur. If the judgment layer is re-developed, the development and test workload is huge. Meanwhile, because there is no association between the existing two alarm service functions, each function module must be maintained independently, thus requiring high maintenance costs. In addition, there are many repeated codes between these two function components, wasting unnecessary resources.

According to embodiments of the present invention, because there is already a judging component with the judgment numeric value greater than a threshold, only another judging component with the judgment numeric value smaller than another threshold needs to be developed. This function may be implemented by combining these two judging components. Therefore, in addition to the advantages in preceding item 1, embodiments of the present invention share the components and improve the resource utilization.

3. If a same apparatus needs to be used to generate an alarm when the number of timeout tickets of an employee is beyond a specific numeric value range on the basis of the service alarm function in preceding item 2, it is necessary to modify or develop a judging and filtering logic function component beyond the specific numeric value range according to the conventional technology. This may also cause weaknesses of preceding item 2. In addition, the existing resources cannot be fully utilized.

According to embodiments of the present invention, because there are already judging components with the judgment numeric value greater than and smaller than a threshold, only the following modifications need to be made in the executing script: setting the numeric value of the judging component with the numeric value smaller than a threshold to a lower value and setting the numeric value of the judging component with the numeric value greater than a threshold to a higher value, without developing any code. In addition to the advantages in preceding item 2, embodiments of the present invention do not bring about new errors to a program because no code is modified in the program. Only the script file needs to be debugged, thus achieving a higher efficiency.

4. If a same apparatus needs to be used to generate an alarm when the number of timeout tickets of an employee reaches the alarm threshold, it is necessary to configure two alarm logic function modules according to the conventional technology. This may cause weaknesses same as those in preceding item 2, such as redundant codes, independent tests required for the two logic function modules, heavy test workload, heavy maintenance workload due to requirements for maintaining repeated function codes, and heavy development workload.

According to embodiments of the present invention, two service fields are configured through the script file. One service field is configured to judge the number of timeout tickets, and the other service field is configured to judge the timeout ticket ratio. It is unnecessary to re-develop codes. Only one set of codes needs to be maintained, thus reducing the maintenance workload. Only the new script file needs to be tested, thus reducing the test workload.

It is apparent that those skilled in the art can make various modifications and variations to the invention without departing from the spirit and scope of the invention. The present invention is intended to cover these modifications and variations provided that they fall in the scope of protection defined by the following claims or their equivalents.

## Claims

1. An apparatus for generating alarms, **characterized by** comprising:
a service configuration information storing module, adapted to store configuration information of an alarm service;
an attribute obtaining module, adapted to obtain attributes of monitored data;
a component storing module, adapted to store judging components or judging components and event components;
a script file storing module, adapted to store a script file that implements the alarm service, wherein the script file comprises calling addresses of the judging components that are arranged in an execution sequence or calling addresses of the judging components and the event components;
a judgment executing module, connected to the script file storing module and the component storing module, and adapted to call and execute the judging components or event components in turn according to the calling addresses that are arranged in the execution sequence in the script file, and select the monitored data meeting alarm conditions;
a notifying module, adapted to generate alarms for the attributes of the monitored data meeting the alarm conditions; and
a scheduling module, connected to the service configuration information storing module, the attribute obtaining module, the judgment executing module, and the notifying module, and adapted to obtain the configuration information of the alarm service, obtain the monitored data of the alarm service according to the configuration information, instruct the judgment executing module to execute the script file of the alarm service, select the monitored data meeting the alarm conditions, instruct the attribute obtaining module to obtain the attributes of the monitored data meeting the alarm conditions, and instruct the notifying module to generate alarms for the attributes of the monitored data meeting the alarm conditions.

2. The apparatus of claim 1, further comprising a service configuration managing module, wherein: the scheduling module is connected to the service configuration information storing module through the service configuration managing module, and the service configuration managing module is adapted to obtain the configuration information of the alarm service from the service configuration information storing module according to an instruction from the scheduling module.

3. The apparatus of claim 2, wherein:
the service configuration information storing module is further adapted to store authentication information for obtaining the configuration information of the alarm service; and
the service configuration managing module is further adapted to authenticate the authentication information when obtaining the configuration information of the alarm service, and return the configuration information if the authentication succeeds.

4. The apparatus of claim 2, further comprising: a monitored data storing module, connected to the attribute obtaining module and the scheduling module, and adapted to store the monitored data.

5. The apparatus of claim 4, further comprising: a monitored data collecting module, connected to the monitored data storing module, and adapted to collect the monitored data.

6. The apparatus of claim 4 or 5, further comprising: a monitored data managing module, connected to the monitored data storing module, and adapted to modify values or attributes of the monitored data.

7. The apparatus of claim 6, wherein: one or more of the service configuration information storing module, the component storing module, the script file storing module, and the monitored data storing module are integrated; or one or more of the service configuration managing module, the attribute obtaining module, and the monitored data managing module are integrated.

8. The apparatus of claim 1, wherein: the service configuration information storing module is further adapted to store authentication information for obtaining the configuration information of the alarm service; and the service configuration managing module is further adapted to authenticate the authentication information submitted when obtaining the configuration information, and return the configuration information if the authentication succeeds or authentication failure prompt information if the authentication fails.

9. A method for generating alarms, **characterized by** comprising:
obtaining configuration information of an alarm service, and obtaining monitored data of the alarm service according to the configuration information; obtaining a script file that implements the alarm service; calling and executing related judging components or event components in turn according to calling addresses that are arranged in an execution sequence in the script file, and selecting the monitored data meeting alarm conditions; and generating alarms for attributes of the monitored data meeting the alarm conditions.

10. The method of claim 9, wherein the process of obtaining the monitored data comprises: obtaining, by an obtaining interface that is specified in the configuration information and associated with a service ID of the alarm service, the monitored data.

11. The method of claim 9, wherein the attributes comprise an attribute name and an attribute value corresponding to the attribute name.

12. The method of claim 11, wherein before obtaining the script file that implements the alarm service, the method further comprises: obtaining the attributes of the monitored data, and obtaining the script file of the alarm service if the attributes of the monitored data comprise the attribute name and attribute value.

13. The method of claim 11, wherein the process of generating alarms for the attributes of the monitored data meeting the alarm conditions comprises: obtaining the attribute name and attribute value of the monitored data meeting the alarm conditions, and generating alarms for the attribute name and attribute value.

14. The method of claim 9, wherein the process of obtaining the configuration information of the alarm service comprises: authenticating authentication information submitted when obtaining the configuration information, and returning the configuration information if the authentication succeeds.

15. The method of claim 14, wherein the authentication information comprises a user name and a password.

16. The method of claim 15, wherein the authentication information further comprises an address for obtaining the configuration information and/or a service ID of the requested alarm service.

17. The method of any of claims 9 to 16, comprising: if there is no script file that implements the alarm service, selecting the judging components or judging components and event components that are necessary for the script file, and constructing the script file by using the calling addresses of the judging components or event components according to the execution sequence in the script file.

18. The method of claim 17, comprising: if there are no judging components or event components that are necessary for the script file, adding judging components or event components that do not exist and are necessary for the script file, and determining the calling addresses of the judging components or event components.
